# EUROPEAN PATENT APPLICATION

(11) **EP 4 742 011 A2**
(43) Date of publication of application: **13.05.2026**
(21) Application number: 26169640.5
(22) Date of filing: 31.03.2026
(51) Int. Cl.: G06F 3/0354, G06F 3/04817, G06F 3/0482, G06F 3/04883, G06F 3/04886, G06F 9/451

(54) **DISPLAY METHOD AND APPARATUS BASED ON DOCK BAR, AND ELECTRONIC DEVICE**

(30) Priority: 16.10.2025 CN 202511483258
(71) Applicant: XG TECH PTE. LTD., Singapore 179098 (SG)
(72) Inventor: LIN, Tao, 179098 Singapore (SG); DING, Chen, 179098 Singapore (SG); DONG, Yiwei, 179098 Singapore (SG); HU, Wenxiao, 179098 Singapore (SG)
(74) Representative: Casalonga

(57) **Abstract**

The disclosure relates to field of terminal display technologies, and provides a display method and apparatus based on a dock bar, and an electronic device. The method includes: displaying a dock bar in a display screen of an electronic device; determining a target scenario based on content displayed in a target area of the display screen and/or a running state of an application of a target type in the electronic device; determining, based on the target scenario, a target component in a plurality of preset components, and displaying the target component in the dock bar; in response to a switching operation performed by a user on the target component, re-determining the target scenario, and updating, based on the re-determined target scenario, the target component displayed in the dock bar. This enables to display different components in the dock bar according to the target scenario, improving display flexibility and user experience.

## Description

### FIELD OF THE INVENTION

Embodiments of the present disclosure relate to the field of terminal display technologies, and in particular, to a display method and apparatus based on a dock bar, and an electronic device.

### BACKGROUND OF THE INVENTION

In a terminal with a display function, for example, an in-vehicle terminal, a desktop is usually provided with a dock bar. The dock bar is usually disposed at the bottom or side of the desktop. When a user slides the screen, the dock bar usually remains stationary, and therefore, application icons of a number of frequently used applications may be placed in the dock bar, facilitating user access to frequently used applications through the dock bar.

### SUMMARY OF THE INVENTION

Current dock bar display methods usually allow to display only fixed application icons or controls in the dock bar, such that the interface lack flexibility, affecting user experience.

To solve the above technical problem, embodiments of the present disclosure provide a display method and apparatus based on a dock bar, and an electronic device, capable of improving the flexibility of interface display.

A first aspect of the present disclosure provides a display method based on a dock bar. The method includes: displaying a dock bar in a display screen of an electronic device; determining a target scenario based on content displayed in a target area of the display screen and/or a running state of an application of a target type in the electronic device; determining, based on the target scenario, a target component in a plurality of preset components, and displaying the target component in the dock bar, wherein the preset components are configured for operating the application of the target type by a user; and in response to a switching operation performed by the user on the target component, re-determining the target scenario, and updating, based on the re-determined target scenario, the target component displayed in the dock bar.

A second aspect of the present disclosure provides an apparatus. The apparatus includes: a display screen and a processor, wherein the display screen is configured for displaying a dock bar, and displaying a target component in the dock bar; and the processor is configured for determining a target scenario based on content displayed in a target area of the display screen and/or a running state of an application of a target type in an electronic device; determining, based on the target scenario, the target component in a plurality of preset components, wherein the preset components are configured for operating the application of the target type by a user, the preset components are configured for operating the application of the target type by a user; and in response to a switching operation performed by the user on the target component, re-determining a target scenario, and returning to the determining, based on the target scenario, the target component in a plurality of preset components.

In a third aspect of the present disclosure, embodiments of the present disclosure provide a computer-readable storage medium, wherein the storage medium stores a computer program, and the computer program is configured for implementing the display method based on a dock bar provided by the first aspect.

A fourth aspect of the present disclosure provides an electronic device, wherein the electronic device includes a processor and a memory for storing processor-executable instructions, wherein the processor is configured for reading the executable instructions from the memory and executing the executable instructions, to implement the display method based on a dock bar provided by the first aspect.

Based on the display method based on a dock bar provided in the present disclosure, it is enabled to display, in the dock bar, a target component corresponding to the target scenario, and also re-determine and display the target component in response to a switching operation performed by the user. Compared with the traditional methods which display only fixed application icons or controls, the present disclosure enables to improve the flexibility of interface presentation, thereby enhancing user experience.

### BRIEF DESCRIPTION OF THE DRAWINGS

By describing the embodiments of the present disclosure in more detail in combination with the accompanying drawings, the above and other objectives, features, and advantages of the present disclosure will become more apparent. The accompanying drawings are used to provide a further understanding of the embodiments of the present disclosure, constitute a part of the specification, are used together with the embodiments of the present disclosure to explain the present disclosure, and do not constitute a limitation to the present disclosure. In the accompanying drawings, identical reference numerals usually represent identical components or steps.
FIG. 1 is a block diagram of a display system based on a dock bar according to an exemplary embodiment of the present disclosure.
FIG. 2 is a schematic flowchart of a display method based on a dock bar according to an exemplary embodiment of the present disclosure.
FIG. 3 is a schematic flowchart of a display method based on a dock bar according to another exemplary embodiment of the present disclosure.
FIG. 4 is a schematic diagram of a first component according to an exemplary embodiment of the present disclosure.
FIG. 5 is a schematic flowchart of a display method based on a dock bar according to yet another exemplary embodiment of the present disclosure.
FIG. 6 is a schematic diagram of a second component according to an exemplary embodiment of the present disclosure.
FIG. 7 is a schematic flowchart of a display method based on a dock bar according to a fourth exemplary embodiment of the present disclosure.
FIG. 8 is a schematic diagram of a third component according to an exemplary embodiment of the present disclosure.
FIG. 9 is a schematic flowchart of a display method based on a dock bar according to a fifth exemplary embodiment of the present disclosure.
FIG. 10 is a schematic diagram of target scenario and target component switching according to an exemplary embodiment of the present disclosure.
FIG. 11 is a schematic flowchart of a display method based on a dock bar according to a sixth exemplary embodiment of the present disclosure.
FIG. 12 is a schematic flowchart of a display method based on a dock bar according to a seventh exemplary embodiment of the present disclosure.
FIG. 13 is a schematic diagram of sliding a second component according to an exemplary embodiment of the present disclosure.
FIG. 14 is a schematic flowchart of a display method based on a dock bar according to an eighth exemplary embodiment of the present disclosure.
FIG. 15 is a schematic flowchart of a display method based on a dock bar according to a ninth exemplary embodiment of the present disclosure.
FIG. 16 is a schematic flowchart of a display method based on a dock bar according to a tenth exemplary embodiment of the present disclosure.
FIG. 17 is a schematic diagram of determining an initial component according to an exemplary embodiment of the present disclosure.
FIG. 18 is a schematic structural diagram of a display apparatus based on a dock bar according to an exemplary embodiment of the present disclosure.
FIG. 19 is a structural diagram of an electronic device according to an exemplary embodiment of the present disclosure.

### DETAILED DESCRIPTION OF THE EMBODIMENTS

Hereinafter, example embodiments according to the present disclosure will be described in detail with reference to the accompanying drawings. Apparently, the described embodiments are only a part of the embodiments of the present disclosure, rather than all embodiments of the present disclosure. It should be understood that the present disclosure is not limited by the example embodiments described herein.

It should be noted that unless otherwise specifically stated, the relative arrangement, numerical expressions, and numerical values of components and steps set forth in these embodiments do not limit the scope of the present disclosure.

### Application Overview

In a terminal with a display function, for example, an in-vehicle terminal, a graphical interface such as an operating system desktop is usually provided with a dock bar. The dock bar is usually a long strip area disposed at an edge of the graphical interface, such as the bottom of the operating system desktop, for launching an application or switching between running applications. When a user slides the screen, the dock bar usually remains stationary, and therefore, application icons of a number of frequently used applications may be placed in the dock bar, such that no matter which page the user slides to, the frequently used applications remain available through the dock bar.

However, current dock bar display methods usually allow to display only fixed application icons or controls in the dock bar, such that the interface lack flexibility, making it impossible to dynamically adjust displayed content according to an actual usage scenario, thus affecting user experience. For example, after a user opens a song list page and plays music, icons of multiple music applications unrelated to a current scenario remain displayed in the dock bar, thus failing to effectively meet the user's immediate song switch need.

Embodiments of the present disclosure propose a new solution, capable of determining a target scenario in real time and displaying, in the dock bar, a target component corresponding to the target scenario; and also re-determining and displaying the target component in response to a switching operation performed by the user. Compared with the traditional methods which display only fixed application icons or controls, the present disclosure enables to dynamically adjust the content displayed in the dock bar, better matching it to an actual application scenario, thus improving the flexibility of interface presentation, thereby enhancing user experience.

### Exemplary System

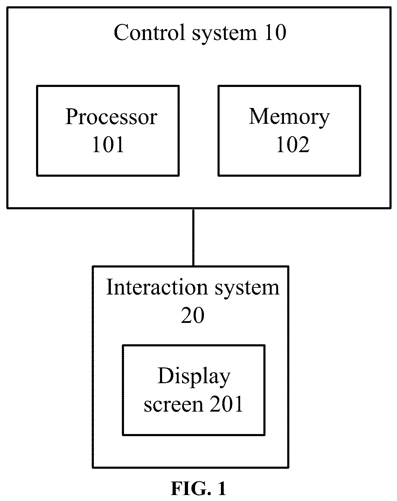

FIG. 1 is a block diagram of a display system based on a dock bar according to an exemplary embodiment of the present disclosure.

As shown in FIG. 1, in an embodiment, a display system based on a dock bar may include a control system 10 and an interaction system 20, and the control system 10 performs data transmission with the interaction system 20, thereby controlling the interaction system 20 to display a target component in the dock bar.

The control system 10 may include a processor 101, wherein the processor 101 may include a general-purpose processor such as a central processing unit (CPU), a graphics processing unit (GPU), etc., or may include an accelerated computing unit designed for deep learning tasks, autonomous driving tasks, etc., such as a neural processing unit (NPU), etc., or may be a dedicated processor such as an ASIC, an FPGA, etc.

The control system 10 may further include a memory 102, wherein the memory 102 may include transitory memory (volatile memory), such as dynamic random access memory (DRAM), static random access memory (SRAM), etc.; and may also include non-transitory memory (nonvolatile memory, NVM), such as read-only memory (ROM), flash memory, etc.

In the control system 10, the memory 102 may be used to store data, such as information on preset components, a mapping relationship between a preset component and a scenario, a mapping relationship between a scenario and a dock bar display style, etc. The memory 102 may also be used to store processor-executable program instructions. The processor 101 may load and execute the program instructions in the memory, to implement a display method based on a dock bar. For example, the processor 101 may determine a target scenario, determine a target component based on the target scenario, and send a signal to the interaction system to control the interaction system to display the target component in the dock bar, etc.

The interaction system 20 includes a display screen 201. The display screen 201 may be an in-vehicle display screen, such as a central control display screen, an instrument panel, or a head-up display screen, etc., or may be a display screen of a mobile terminal, etc. The display screen 201 may be of a liquid crystal display (LCD) type, an organic light-emitting diode display (OLED) type, etc. In the interaction system 20, the display screen 201 may be used to display a graphical interface, and display a dock bar in the graphical interface, and may also display the target component in the dock bar based on the signal sent by the control system.

In some implementations, the display screen 201 in the interaction system 20 may be a touch screen capable of receiving user operations such as clicks, touches, and slides. In this way, when receiving a switching operation performed by the user on the target component, the interaction system 20 may send a corresponding signal to the control system 10, so that the control system 10 re-determines the target scenario and the target component according to the received operation information, and controls the interaction system 20 to update the content displayed in the dock bar.

In some implementations, the display system based on a dock bar may be integrated into a smart cockpit system.

### Exemplary Method

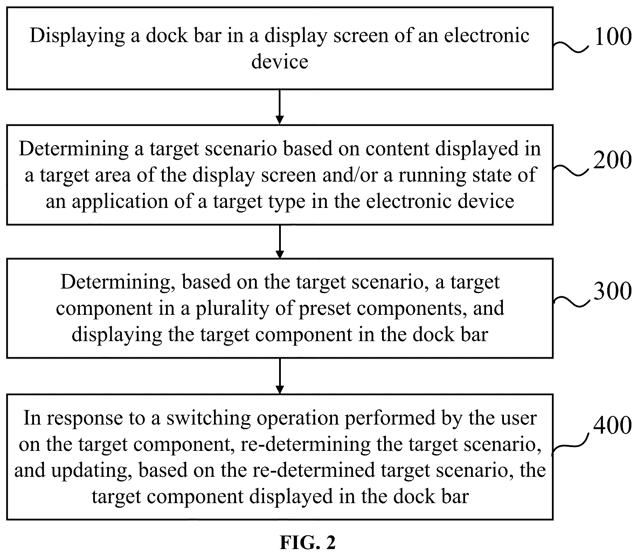

FIG. 2 is a schematic flowchart of a display method based on a dock bar according to an exemplary embodiment of the present disclosure. The embodiment may be applied to the foregoing apparatus. As shown in FIG. 2, the method includes steps as follows.

### Step 100, Displaying a dock bar in a display screen of an electronic device

In step 100, first, the control system controls the display screen of the electronic device to display the dock bar, wherein the dock bar may be located at the bottom of the display screen, or at the left side or the right side of the display screen. A number of application icons, shortcut buttons, etc., may be displayed in the dock bar, and the specific content displayed in the bar may be dynamically adjusted according to a target scenario determined subsequently.

Step 200, Determining a target scenario based on content displayed in a target area of the display screen and/or a running state of an application of a target type in the electronic device

In step 200, the control system may determine the target scenario based on the content displayed in the target area of the display screen, for example, the interface of a specific application displayed in the target area. Illustratively, if the main interface of application A is currently being displayed in the target area, it may be considered that the target scenario is the scenario corresponding to application A. In this way, in a subsequent step, a component related to application A may be displayed in the dock bar.

In one example, the content displayed in the target area may be determined by monitoring a window title corresponding to the interface displayed in the target area. In another example, the target scenario may also be determined according to the running state of the application of the target type in the electronic device. For example, if the target type is a video type, the target scenario may be determined according to whether a respective application of the video type is in a playing state. Specifically, if application B of the video type is currently in the playing state, it may be considered that the target scenario is a playback scenario corresponding to applications of the video type. In this way, in a subsequent step, a component related to applications of the video type may be displayed in the dock bar.

In one example, the running state of an application of the target type in the electronic device may be determined according to a process currently running on the electronic device, or by monitoring a currently executed class name using methods such as probes, etc.

### Step 300. Determining, based on the target scenario, a target component in a plurality of preset components, and displaying the target component in the dock bar

In step 300, after the target scenario is determined, to facilitate the user operating an application of the target type in the target scenario, the control system may select, from the plurality of preset components, a target component matching the target scenario, and display the component in the dock bar. A preset component is pre-designed for the user to operate an application of the target type. Illustratively, if it is determined that the target scenario is a playback scenario corresponding to applications of the video type, a target component suitable for the playback scenario may be selected from a plurality of preset components for operating applications of the video type. For example, a preset component including buttons such as a play/pause button, a playback speed button, and a volume adjustment button may be selected and used as the target component. In this way, the user may perform an operation related to the target scenario on an application of the video type through the target component.

Step 400, In response to a switching operation performed by the user on the target component, re-determining the target scenario, and updating, based on the re-determined target scenario, the target component displayed in the dock bar.

In step 400, when the user performs a switching operation on the target component displayed in the dock bar, the control system may determine a target scenario corresponding to the switching operation, and then re-determine and update, based on the re-determined target scenario, the target component displayed in the dock bar. Illustratively, when a first component is displayed in the dock bar, if the user performs a switching operation on the first component, the control system may determine that the user intends to switch to a new target scenario different from the current target scenario, and then determine, based on the new target scenario, a new target component, such as a second component, in the plurality of preset components. In this way, the first component currently displayed in the dock bar may be replaced with the second component.

As may be seen from the above technical solutions, the method provided in the embodiments of the present disclosure is capable of determining a target scenario in real time and displaying, in the dock bar, a target component corresponding to the target scenario; and also re-determining and displaying the target component in response to a switching operation performed by the user. Compared with the traditional methods which display only fixed application icons or controls, the present disclosure enables to dynamically adjust the content displayed in the dock bar, better matching it to an actual application scenario, thus improving the flexibility of interface presentation, thereby enhancing user experience

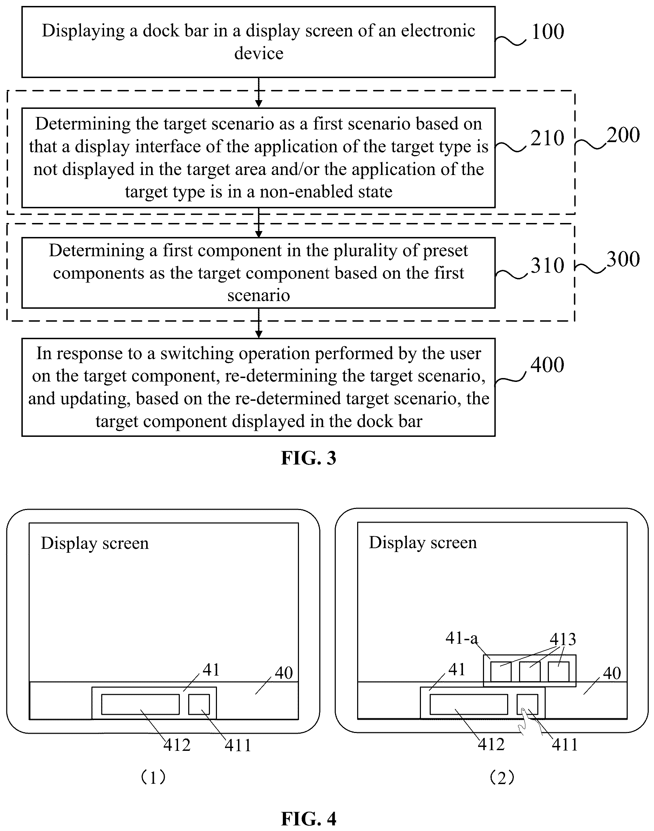

FIG. 3 is a schematic flowchart of a display method based on a dock bar according to another exemplary embodiment of the present disclosure. As shown in FIG. 3, based on the embodiment shown in FIG. 2, step 200 may include the following step 210, and step 300 may include the following step 310.

Step 210, Determining the target scenario as a first scenario based on that a display interface of the application of the target type is not displayed in the target area and/or the application of the target type is in a non-enabled state

In step 210, when a display interface of the application of the target type is not displayed in the target area and the application of the target type is in a non-enabled state, the control system may determine the first scenario as the target scenario. The first scenario may be used to indicate that the user is not currently using any application of the target type and has no intention to use an application of the target type.

For example, if the target type is the audio type, currently no interface of any application of the audio type is displayed in the target area of the display screen, and all applications of the audio type installed in the electronic device are not in the running state, the control system may determine that currently it is in the first scenario.

It should be noted that the target scenario may also be determined based solely on the content displayed in the target area of the display screen, without considering the running state of the application of the target type. In this case, the first scenario may be determined as the target scenario as long as no display interface of any application of the target type is displayed in the target area. Similarly, the target scenario may also be determined based solely on the running state of the application of the target type in the electronic device, without considering the content displayed in the target area. In this case, the first scenario may be determined as the target scenario as long as the application of the target type is in a non-enabled state.

Step 310, Determining a first component in the plurality of preset components as the target component based on the first scenario

In step 310, if the target scenario is the first scenario, a first component corresponding to the first scenario may be selected from the plurality of preset components and used as the target component. The first component is capable of displaying an icon (hereinafter referred to as a first icon) corresponding to an initial application of the target type. For example, if the target type is the audio type, the first component is capable of displaying an icon corresponding to an initial music application. The initial music application may be a preset default application, or may be an application of the audio type last run by the user.

FIG. 4 is a schematic diagram of a first component according to an exemplary embodiment of the present disclosure.

As shown in (1) of FIG. 4, a dock bar 40 is displayed at the bottom of the display screen. In the first scenario, a first component 41 is displayed in the dock bar 40, and a first icon 411 corresponding to a first application may be displayed in the first component 41. The first application may be an application of the target type last run by the user. In one example, the target type is the audio type, and the first component may also display information corresponding to an audio that the first application was playing when the user last exited the first application, such as audio name information 412.

In one example, in the first scenario, if the user clicks on the first icon, the electronic device may enable the first application in response to that the user clicks on the first icon.

In another example, in the first scenario, if the user long-presses the first icon, the first component may display icons (hereinafter referred to as first extended icons) of a number of target-type applications of the audio type. In this case, if the user clicks on a first extended icon, in response to that the user clicks on the first extended icon, an application of the audio type (hereinafter referred to as a second application) corresponding to the first extended icon is enabled. As shown in (2) of FIG. 4, in response to the user long-pressing the first icon 411, the first component may display an extended area 41-a, and display first extended icons 413 corresponding to a number of applications of the audio type in the extended area 41-a. In this way, by clicking on any first extended icon 413, the user may select and enable a second application corresponding to the first extended icon 413 that has been clicked on.

After the first application or the second application is enabled, the target scenario switches from the first scenario to a scenario where an application of the target type is enabled, such as a second scenario. The control system may update the target component displayed in the dock bar based on the re-determined target scenario, such as the second scenario.

As may be seen from the above technical solutions, the method provided in the embodiments of the present disclosure enables to identify the first scenario based on the enabling state of the application of the target type and the content displayed in the target area, and then present a first component containing a first icon in the dock bar. In this way, the user may quickly launch the application of the target type by operating the first icon in the dock bar, thereby simplifying the operation process in the first scenario, improving user experience.

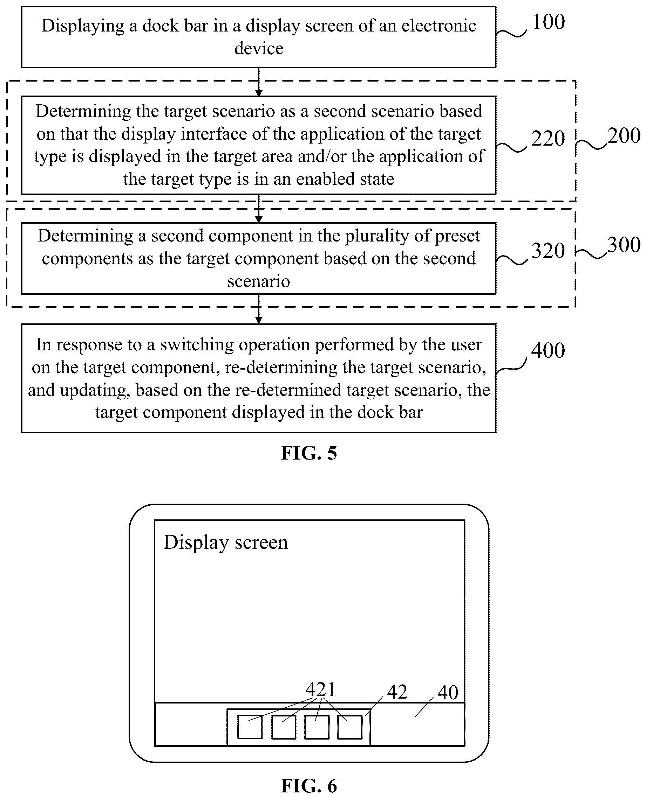

FIG. 5 is a schematic flowchart of a display method based on a dock bar according to yet another exemplary embodiment of the present disclosure. As shown in FIG. 5, based on the embodiment shown in FIG. 1, step 200 may include the following step 220, and step 300 may include the following step 320.

Step 220, Determining the target scenario as a second scenario based on that the display interface of the application of the target type is displayed in the target area and/or the application of the target type is in an enabled state

In step 220, when the display interface of any application of the target type is displayed in the target area and/or any application of the target type installed in the electronic device is in an enabled state, the control system may determine a second scenario as the target scenario. The second scenario may be used to indicate that the user is currently using an application of the target type.

For example, if the target type is the audio type, and the interface of application C of the audio type is currently displayed in the target area of the display screen, the control system may determine that currently it is in the second scenario. As another example, if the target type is the audio type, and application C of the audio type is in an enabled state, the control system may determine that currently it is in the second scenario.

Step 320, Determining a second component in the plurality of preset components as the target component based on the second scenario.

In step 320, if the target scenario is the second scenario, a second component corresponding to the second scenario may be selected from the plurality of preset components and used as the target component. The second component is capable of displaying a second icon corresponding to at least one candidate application of the target type. For example, if the target type is the audio type, the second component is capable of displaying second icons corresponding to a number of applications of the audio type.

FIG. 6 is a schematic diagram of a second component according to an exemplary embodiment of the present disclosure.

As shown in FIG. 6, a dock bar 40 is displayed at the bottom of the display screen. In the second scenario, a second component 42 is displayed in the dock bar 40, and icons (hereinafter referred to as second icons) 421 corresponding to 4 candidate applications may be displayed in the second component 42. In this case, if the user clicks on any one second icon 421, the electronic device may enable a candidate application corresponding to the second icon 421 in response to that the user clicks on the second icon 421. In one example, the target type may be the audio type.

It may be understood that, limited by the area occupied by the second component, the second component may only display second icons corresponding to some applications of the target type installed in the electronic device. For example, if 10 applications of the audio type are installed in the electronic device, 4 of them may be used as candidate applications, so that the second component only displays second icons corresponding to the 4 candidate applications. The 4 candidate applications may be the 4 applications of the audio type used most frequently by the user, or the 4 applications of the audio type most recently used by the user, or the top 4 applications of the audio type ranked in a preset application list formed by applications of the target type.

It may be understood that 4 applications of the audio type are taken as an example in the embodiments of the present disclosure, which does not mean that the second component may only display second icons corresponding to 4 applications of the audio type. In an actual application scenario, second icons corresponding to more or fewer applications of the audio type may also be displayed.

As may be seen from the above technical solutions, the method provided in the embodiments of the present disclosure enables to identify the second scenario based on the enabling state of the application of the target type and the content displayed in the target area, and then present a second component containing multiple second icons in the dock bar. In this way, the user may quickly access and switch to another application of the target type by operating a second icon in the dock bar without leaving a current application interface, thereby simplifying the operation process in the second scenario, improving user experience.

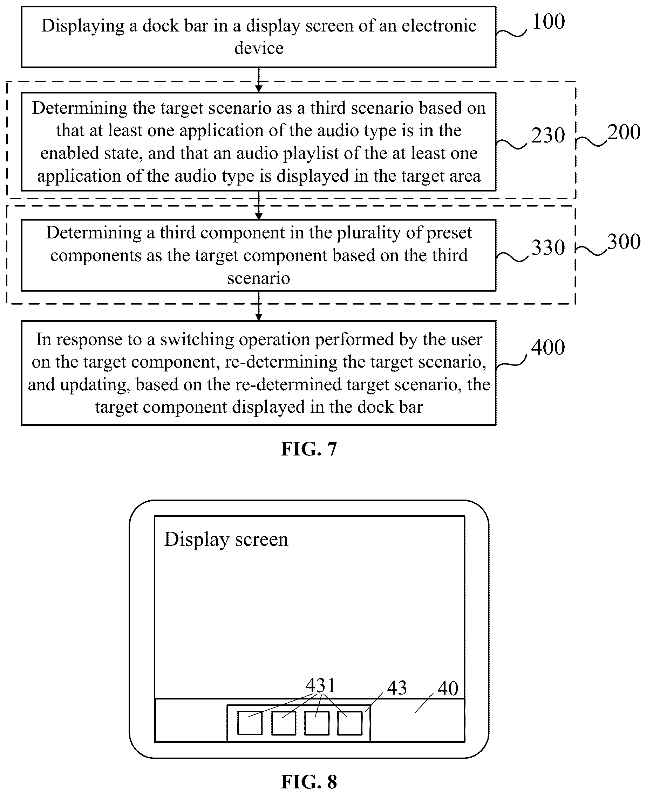

FIG. 7 is a schematic flowchart of a display method based on a dock bar according to a fourth exemplary embodiment of the present disclosure. As shown in FIG. 7, the target type is an audio type. Based on the embodiment shown in FIG. 2, step 200 may include the following step 230, and step 300 may include the following step 330.

Step 230, Determining the target scenario as a third scenario based on that at least one application of the audio type is in the enabled state, and that an audio playlist of the at least one application of the audio type is displayed in the target area

In step 230, in case the target type is the audio type, if any application of the audio type installed in the electronic device is in the enabled state, and an audio playlist of the enabled application of the audio type is displayed in the target area, the control system may determine a third scenario as the target scenario. The third scenario may be used to indicate that the user is currently using an application of the audio type and has an intention to play an audio using the application of the audio type.

For example, if application C of the audio type is in an enabled state, and an audio playlist of application C of the audio type is currently displayed in the target area of the display screen, the control system may determine that the user is currently using application C of the audio type and has an intention to listen to an audio in the audio playlist, and therefore currently it is in the third scenario.

Step 330, Determining a third component in the plurality of preset components as the target component based on the third scenario

In step 330, if the target scenario is the third scenario, a third component corresponding to the third scenario may be selected from the plurality of preset components and used as the target component. The third component is capable of displaying icons (hereinafter referred to as third icons) corresponding to an audio to be played in the audio playlist.

FIG. 8 is a schematic diagram of a third component according to an exemplary embodiment of the present disclosure.

As shown in FIG. 8, a dock bar 40 is displayed at the bottom of the display screen. In the third scenario, a third component 43 is displayed in the dock bar 40, and the third component 43 displays icons (hereinafter referred to as third icons) 431 corresponding to 4 audios to be played. In this case, if the user clicks on any on third icon 431, in response to that the user clicks on the third icon 431, the electronic device may play an audio to be played, such as a song, an audiobook, etc., corresponding to the third icon 431.

It may be understood that, limited by the area occupied by the third component, the third component may only display third icons corresponding to some audios in the audio playlist. For example, if the audio playlist contains 10 audios, 4 of them may be used as audios to be played, so that the third component may only display third icons corresponding to the 4 audios to be played. If the application of the audio type is currently playing an audio in the audio playlist, the 4 audios to be played may be the 4 audios ranked after the audio currently played. If the application of the audio type only displays the audio playlist but is not currently playing any audio, the 4 audios to be played may be the top 4 audios ranked in the audio playlist.

It may be understood that 4 audios to be played are taken as an example in the embodiments of the present disclosure, which does not mean that the third component may only display third icons corresponding to 4 audios to be played. In an actual application scenario, third icons corresponding to more or fewer audios to be played may also be displayed.

It should be noted that, in the foregoing embodiments of the present disclosure, only the display of a first icon in the first component, a second icon in the second component, and a third icon in the third component is introduced, which does not mean that a respective target component thereof may only display a corresponding icon. In an actual application scenario, in addition to the foregoing first icon, second icon, and third icon, the respective target component may also display other buttons. For example, the third component may also display a volume control button, a playback speed control button, a playback progress bar, etc.

As may be seen from the above technical solutions, the method provided in the embodiments of the present disclosure enables to identify the third scenario based on the enabling state of the application of the target type and the content displayed in the target area, and then present a third component containing multiple third icons in the dock bar. In this way, the user may quickly switch to another audio in the audio playlist by operating a third icon in the dock bar, thereby facilitating audio switching, improving user experience.

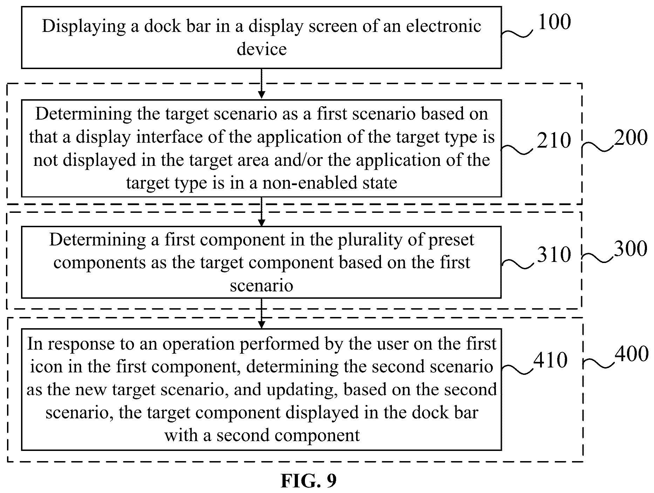

FIG. 9 is a schematic flowchart of a display method based on a dock bar according to a fifth exemplary embodiment of the present disclosure. As shown in FIG. 9, based on the embodiment shown in FIG. 3, step 400 may include the following step 410.

Step 410, In response to an operation performed by the user on the first icon in the first component, determining the second scenario as the new target scenario, and updating, based on the second scenario, the target component displayed in the dock bar with a second component

In step 410, in the first scenario, the display screen displays the first component in the dock bar, and the first component displays the first icon. In this case, the user may switch the target scenario from the first scenario to the second scenario by operating the first icon. Correspondingly, the target component displayed in the dock bar is also switched from the first component to the second component.

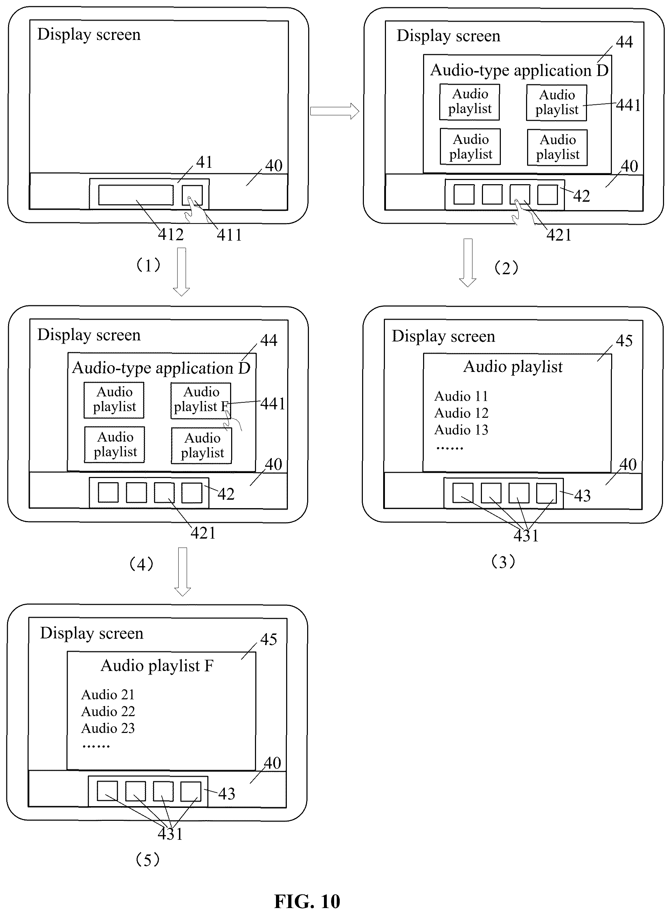

FIG. 10 is a schematic diagram of target scenario and target component switching according to an exemplary embodiment of the present disclosure.

As shown in (1) of FIG. 10, in the first scenario, the dock bar 40 displays the first component 41. In this scenario, in response to that the user clicks on the first icon 411 in the first component 41, the electronic device may enable application D of the audio type corresponding to the first icon 411. As shown in (2) of FIG. 10, in this case, the electronic device switches from the first scenario to the second scenario, switches the target component displayed in the dock bar from the first component 41 to the second component 42, and displays the main interface 44 of application D of the audio type in the target area of the display screen.

In one example, the user may also switch the target scenario from the first scenario to the second scenario in ways other than operating the first icon 411. For example, the user may click on a shortcut icon of an application of the audio type on the desktop or in a start menu. In this way, in response to that the user clicks on the shortcut icon, the electronic device enables the application of the audio type corresponding to the shortcut icon, and then switches from the first scenario to the second scenario.

As may be seen from the above technical solutions, the method provided in the embodiments of the present disclosure enables, when the user operates the first icon, to automatically switch from the first scenario to the second scenario, and correspondingly update the target component displayed in the dock bar. In this way, the user may trigger the switching of the target scenario and the target component directly through the dock bar, and the content displayed by the target component after the switching matches the user's intention, facilitating user operation.

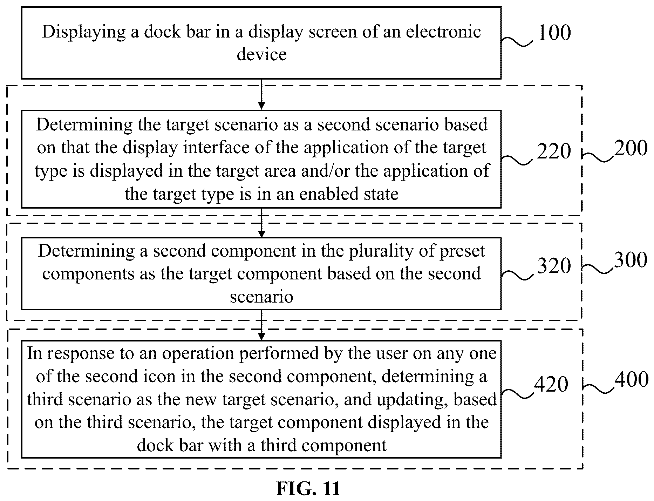

FIG. 11 is a schematic flowchart of a display method based on a dock bar according to a sixth exemplary embodiment of the present disclosure. As shown in FIG. 11, based on the embodiment shown in FIG. 5, step 400 may include the following step 420.

Step 420, In response to an operation performed by the user on any one of the second icon in the second component, determining a third scenario as the new target scenario

In step 420, in the second scenario, the display screen displays the second component in the dock bar, and the second component displays at least one second icon. In this case, the user may switch the target scenario from the second scenario to the third scenario by operating a second icon. Correspondingly, the target component displayed in the dock bar is also switched from the second component to the third component.

As shown in (2) of FIG. 10, in the second scenario, the application D of the audio type is in an enabled state, and the dock bar displays the second component 42. In this scenario, in response to that the user clicks on a second icon 421 in the second component, the electronic device may pause application D of the audio type, and enable application E of the audio type corresponding to the second icon 421 that has been clicked on. As shown in (3) of FIG. 10, in this case, the electronic device switches from the second scenario to the third scenario, switches the target component displayed in the dock bar from the second component 42 to the third component 43, and switches the content displayed in the target area from the main interface 44 of application D of the audio type to an audio playlist 45 corresponding to application E of the audio type, which may specifically be a default audio playlist corresponding to application E of the audio type, or an audio playlist corresponding to an audio that the user last played using application E of the audio type, etc.

In one example, the user may also switch the target scenario from the second scenario to the third scenario in ways other than operating the second icon. For example, in the first scenario shown in (1) of FIG. 10, in response to that the user clicks on the first icon 411 in the first component 41, the electronic device may enable application D of the audio type corresponding to the first icon 411, and enter the second scenario as shown in (4) of FIG. 10. In the second scenario shown in (4) of FIG. 10, the main interface of application D of the audio type is displayed in the target area of the display screen, in which case, the user may switch the target scenario from the second scenario to the third scenario by operating the main interface. Specifically, in response to that the user clicks on an icon 441 corresponding to any one playlist (such as audio playlist F) in the main interface, the electronic device switches from the second scenario to the third scenario as shown in (5) of FIG. 10, and displays audio playlist F in the target area of the display screen. In this case, the target component displayed in the dock bar is switched from the second component to the third component, and the third component displays third icons corresponding to audios to be played in audio playlist F.

As may be seen from the above technical solutions, the method provided in the embodiments of the present disclosure enables, when the user operates a second icon, to further switch to the third scenario and update the target component. In this way, the user may trigger the switching of the target scenario and the target component directly through the dock bar, and the content displayed by the target component after the switching matches the user's intention, facilitating user operation.

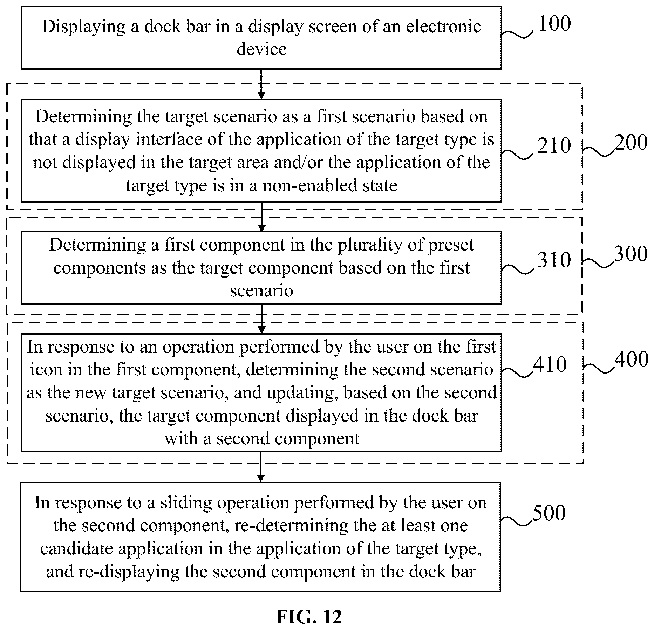

FIG. 12 is a schematic flowchart of a display method based on a dock bar according to a seventh exemplary embodiment of the present disclosure. As shown in FIG. 12, based on the embodiment shown in FIG. 9, the method may further include the following step 500.

Step 500, In response to a sliding operation performed by the user on the second component, re-determining the at least one candidate application in the application of the target type, and re-displaying the second component in the dock bar

In step 500, as mentioned above, limited by the area occupied by the second component, the second component may only display second icons corresponding to some applications of the target type installed in the electronic device. In this case, the user may display and operate the second icon corresponding to another application of the target type by sliding the second component.

In one example, in response to a sliding operation performed by the user on the second component, the at least one candidate application in the application list formed by applications of the target type may be re-determined based on a sliding direction and a sliding distance, and the second icon corresponding to the candidate application may be displayed in the second component. The order of new candidate applications and the original candidate application in the application list may be determined according to the sliding direction, wherein for example, if the sliding direction is to the left or the upward of the display screen, the new candidate applications are ranked before the original candidate applications in the application list; if the sliding direction is to the right or the downward of the display screen, the new candidate applications are ranked after the original candidate applications in the application list. The distance between the new candidate applications and the original candidate applications in the application list may be determined according to the sliding distance. For example, the greater the sliding distance is, the greater the distance between the new candidate applications and the original candidate applications in the application list.

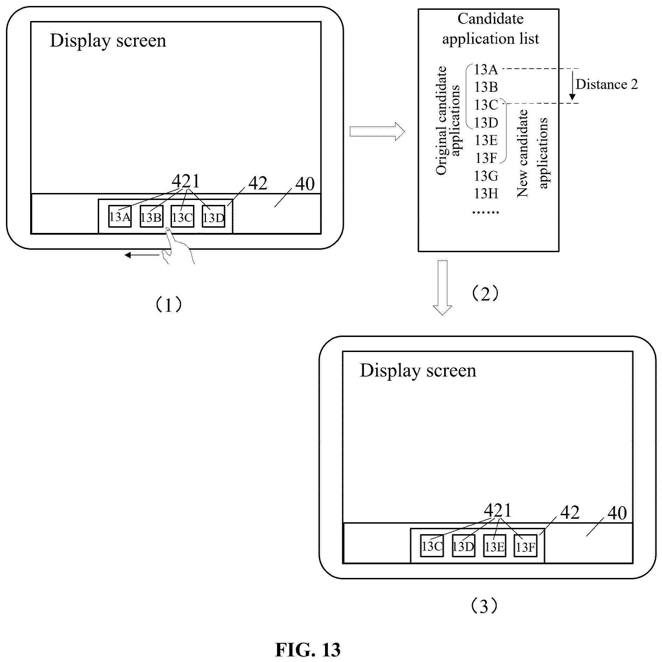

FIG. 13 is a schematic diagram of sliding a second component according to an exemplary embodiment of the present disclosure.

As shown in (1) of FIG. 13, in one example, in the second scenario, the dock bar 40 displays the second component 42, wherein the second component may display second icons 421 corresponding to 4 applications of the audio type (sequentially denoted as applications 13A, 13B, 13C, and 13D of the audio type). In response to a sliding operation performed by the user on the second component 42, including pressing the second component 42 and sliding a first distance in a first direction, candidate applications in a preset candidate application list are re-determined.

As shown in (2) of FIG. 13, in the preset candidate application list, based on the first direction being left, it may be determined that the new candidate applications are ranked after the original candidate applications; based on the first distance, it may be determined that the distance between an original sequence formed by the original candidate applications and a new sequence formed by the new candidate applications is 2. Therefore, 4 new candidate applications, such as applications 13C, 13D, 13E, and 13F of the audio type, that are ranked after and have a distance of 2 from the sequence of the original candidate applications, may be determined.

As shown in (3) of FIG. 13, after the new candidate applications are determined, the content displayed in the second component may be updated, specifically by displaying second icons 421 corresponding to applications 13C, 13D, 13E, and 13F of the audio type in the second component 42. In this case, the user may enable a corresponding application of the audio type by clicking a second icon newly displayed in the second component. In this way, the user may conveniently browse and operate all applications of the audio type installed in the electronic device.

In one example, if the sliding distance is too large, causing the distance between the new candidate applications and the original candidate applications to exceed an actual range of the candidate application list, the control system may adjust accordingly. For example, when the second component is already displaying the second icon corresponding to an application at the end of the application list, if the user continues to slide the second component to the right, candidate application re-determination may not be required. In this case, the second component may keep the currently displayed second icons unchanged, and the user may be reminded through a visual effect or vibration feedback that the end of the application list has been reached.

In one example, in response to a sliding operation performed by the user on the second component, the number of the new candidate applications displayed in the second component may also be determined according to a sliding speed. For example, if the sliding speed is greater than a preset speed threshold, it may be considered that the user is sliding the second component quickly, and therefore it may be determined that the user wants to browse more applications of the target type, in which case, the length of the second component may be temporarily increased, thereby increasing the number of second icons that the second component may display, for example, increasing from being able to display 4 second icons to being able to display 6 second icons. Correspondingly, in this case, 6 candidate applications may be re-selected, and their corresponding second icons may be displayed in the second component. Conversely, if the sliding speed is less than the preset speed threshold, the length of the second component may be restored to the initial length, in which case, the number of second icons that the second component may display reduces accordingly, for example, from displaying 6 second icons back to being able to display 4 second icons. Correspondingly, in this case, 4 candidate applications may be re-selected, and their corresponding second icons may be displayed in the second component.

It should be noted that in FIG. 12 and FIG. 13, switching to the second scenario in response to the user's operation on the first icon, and then re-determining candidate applications in response to the user's sliding operation in the second scenario is taken as an example. In some other examples, the second scenario may also be determined based on the content displayed in the target area of the display screen and/or the running state of the application of the target type in the electronic device, and then candidate applications may be re-determined in response to the user's sliding operation in the second scenario. In other words, the embodiments of the present disclosure only illustrate how to re-determine candidate applications in the second scenario, without limiting how the second scenario is entered.

As may be seen from the above technical solutions, the method provided in the embodiments of the present disclosure enables, when the user slides the second component, to update the candidate applications displayed in the second component according to the direction, distance, and speed of the sliding. In this way, the user may quickly browse and select an application of the target type as needed by sliding the target component, which therefore provides the user with more convenient and comprehensive selection of applications of the target type while ensuring the simplicity of the dock bar, thereby improving the user experience.

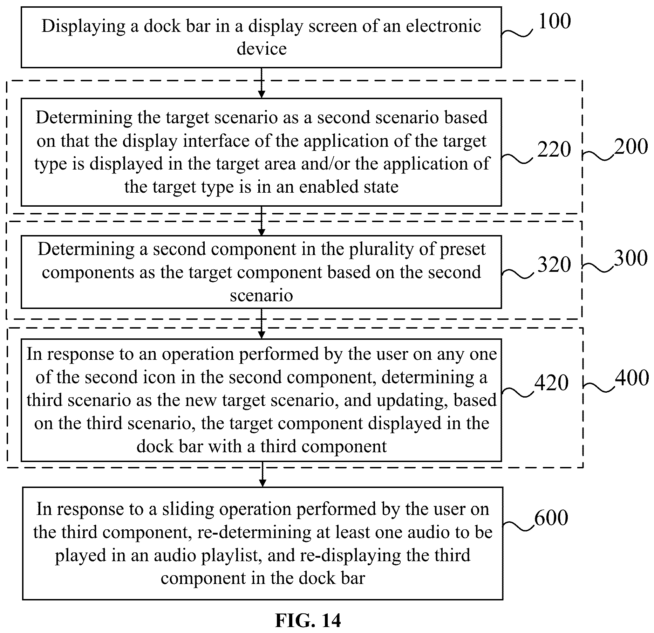

FIG. 14 is a schematic flowchart of a display method based on a dock bar according to an eighth exemplary embodiment of the present disclosure.

As shown in FIG. 14, based on the embodiment shown in FIG. 11, the method may further include the following step 600.

Step 600, In response to a sliding operation performed by the user on a third component, re-determining at least one audio to be played in an audio playlist, and re-displaying the third component in the dock bar

In step 600, as mentioned above, limited by the area occupied by the third component, the third component may only display third icons corresponding to some audios in the audio playlist. In this case, the user may display and operate the third icon corresponding to another audio by sliding the third component.

The method for "in response to a sliding operation performed by the user on a third component, re-determining at least one audio to be played in an audio playlist, and re-displaying the third component in the dock bar" is similar to the foregoing step 500, and will not be repeated here.

As may be seen from the above technical solutions, the method provided in the embodiments of the present disclosure enables, when the user slides the third component, to update the audios to be played that are displayed in the third component according to the direction, distance, and speed of the sliding. In this way, the user may quickly browse and select an audio as needed by sliding the target component, which therefore provides the user with more convenient and comprehensive audio selection while ensuring the simplicity of the dock bar, thereby improving the user experience.

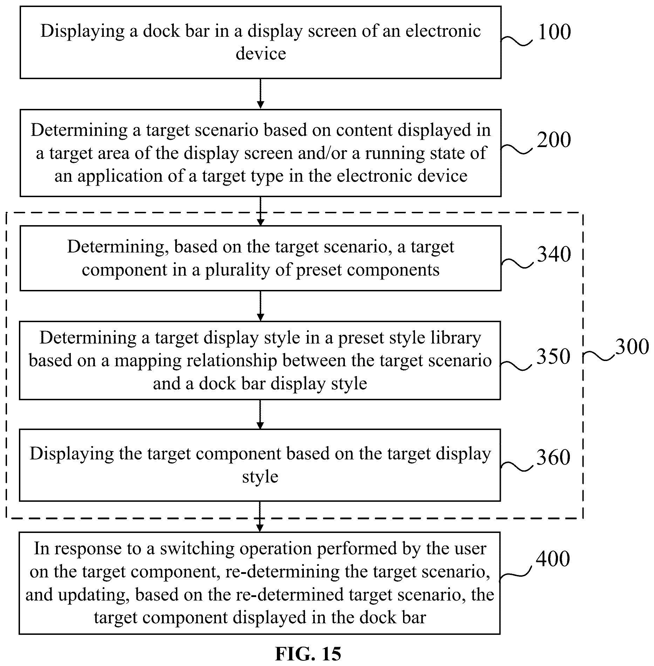

FIG. 15 is a schematic flowchart of a display method based on a dock bar according to a ninth exemplary embodiment of the present disclosure.

As shown in FIG. 15, based on the embodiment shown in FIG. 2, step 300 may include the following step 340 - step 360.

Step 340, Determining, based on the target scenario, a target component in a plurality of preset components

Step 350, Determining a target display style in a preset style library based on a mapping relationship between the target scenario and a dock bar display style

In step 350, a style library may be preset, and the style library stores a mapping relationship between various scenarios and dock bar display styles. In this way, after the target scenario is determined, the style library may be searched based on the mapping relationship between the target scenario and a dock bar display style to find and determine the target display style.

A dock bar display style may include an icon style, a button layout, an artistic presentation effect, a button color, a component background color, etc. For example, the first scenario corresponds to a first display style, and in the first display style, the icon style of a flat style and the button layout of a compact layout are adopted; the second scenario corresponds to a second display style, and in the second display style, the icon style of a three-dimensional style and the button layout of a scattered layout are adopted, and at the same time, and an artistic presentation effect such as a dynamic special effect may be set for second icons; the third scenario corresponds to a third display style, and in the third display style, the button layout highlights a playback control function to facilitate user operation, and at the same time, an artistic presentation effect that may change dynamically according to an audio rhythm may be set for third icons.

In one example, dock bar display styles in the style library may be updated in response to a personalized setting request input by the user, to make the display effect of the target component in the dock bar better match the user's aesthetics and usage habits.

In one example, the style library may be stored in a memory module or a non-transitory flash memory module, to ensure the persistence and accessibility of the dock bar display style data. In this case, the processor may access the style library stored in the memory module or the non-transitory flash memory module, and then call a dock bar display style in the style library.

Step 360, Displaying the target component based on the target display style

In step 360, after the target display style is determined, the target component may be rendered and displayed according to the target display style, thereby achieving different dock bar display effects for different target scenarios.

It should be noted that determining a target scenario based on content displayed in a target area of the display screen and/or a running state of an application of a target type in the electronic device, and then displaying the target component corresponding to the target scenario based on the target display style is taken as an example in the embodiments of the present disclosure. In some other examples, scenario switching may also be performed in response to a user operation, and then the target component corresponding to the target scenario may be displayed based on the target display style. In other words, the embodiments of the present disclosure only illustrate how to display the target component in the target scenario, without limiting how the target scenario is entered.

As may be seen from the above technical solutions, the method provided in the embodiments of the present disclosure enables to establish a mapping relationship between the target scenario and a dock bar display style; when scenario switching is detected, automatically look for a target display style according to the mapping relationship; and then display the target component based on the target display style. In this way, a monotony dock bar display style may be avoided, which brings the user more personalized and diverse visual experiences.

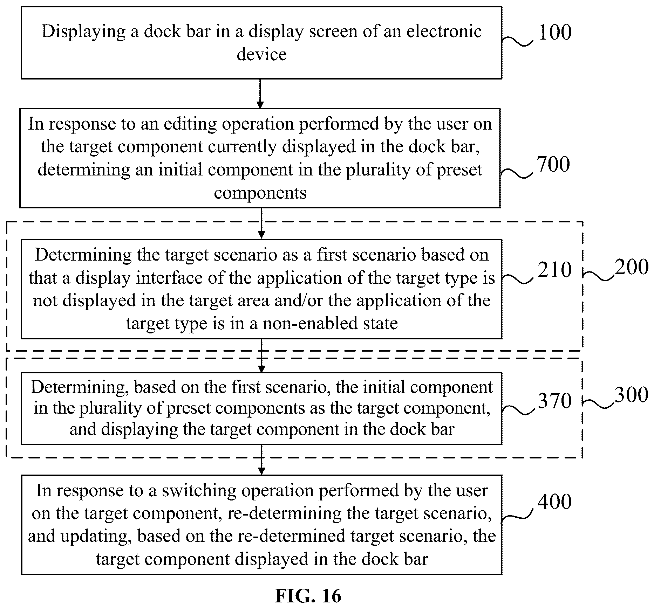

FIG. 16 is a schematic flowchart of a display method based on a dock bar according to a tenth exemplary embodiment of the present disclosure.

As shown in FIG. 16, based on the embodiment shown in FIG. 3, the method may further include the following step 700 after step 100, and step 300 may include the following step 370.

Step 700, In response to an editing operation performed by the user on the target component currently displayed in the dock bar, determining an initial component in the plurality of preset components

In step 700, the user may set the initial component according to actual needs, where the initial component is a component that may be displayed in the dock bar in the first scenario. Specifically, in any one scenario, the user may perform an editing operation on the target component currently displayed in the dock bar. The electronic device enters a component editing mode in response to the user's editing operation on the target component. In the editing mode, in response to the user's selection operation on any one preset component, the preset component may be determined as the initial component.

In one example, the preset components may include the aforementioned first component, second component, and third component.

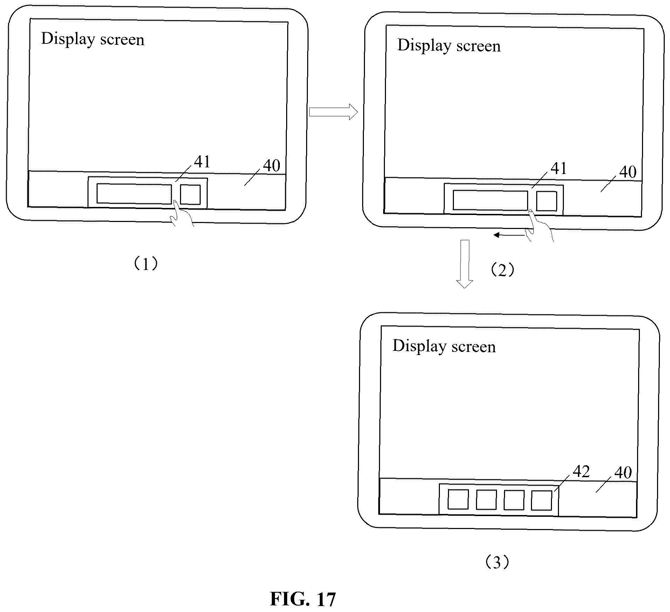

FIG. 17 is a schematic diagram of determining an initial component according to an exemplary embodiment of the present disclosure.

As shown in (1) of FIG. 17, in one example, in the first scenario, the dock bar currently displays the first component 41. In response to the user's long-press operation on the first component 41, the electronic device enters the component editing mode. As shown in (2) of FIG. 17, in the component editing mode, the user performs a sliding operation on the first component 41. In this way, in response to the user's sliding operation on the first component 41, based on the sliding direction and sliding distance, the control system switches the component currently displayed in the dock bar from the first component 41 to another component, such as the second component 42 as shown in (3) of FIG. 17. In response to the user's confirmation operation such as clicking or long-pressing, or in response to not receiving any operation from the user within a preset time period, the second component 42 currently displayed in the dock bar is determined as the initial component. Of course, in other examples, the user may also determine the first component or the third component as the initial component through an editing operation, which is not limited in the present disclosure.

Step 370, Determining, based on the first scenario, the initial component in the plurality of preset components as the target component, and displaying the target component in the dock bar

In step 370, after the initial component is determined, if the current target scenario is the first scenario, the initial component is determined as the target component. For example, if the aforementioned second component 42 is determined as the initial component, when determining that the target scenario is the first scenario, the control system may display the initial component, rather than the first component, in the dock bar.

As may be seen from the above technical solutions, the method provided in the embodiments of the present disclosure enables, when the user enters a component editing mode, to select an initial component in a plurality of preset components through a sliding operation, thereby displaying by default the initial component selected by the user when the first scenario is detected. In this way, the user may customize the initial component displayed in the dock bar, such that the content displayed in the dock bar better matches the user's personal usage habits.

### Exemplary Apparatus

The display method based on a dock bar provided in the foregoing embodiments of the present disclosure has been introduced above. It may be understood that, to implement the various functions of the display method based on a dock bar, the apparatus may include repective hardware and software for implementing the hardware functions.

Those skilled in the art should easily realize that, in combination with the steps of the display method based on a dock bar described in the various embodiments of the present disclosure, the embodiments of the present disclosure may be implemented in form of hardware, or in combination form implemented as software driven hardware. Whether a function is performed by hardware or by software driven hardware depends on the specific application and design constraints of the technical solution. For each specific application, a person skilled in the art may implement a described function using different methods, but such implementation should not be considered to fall beyond the scope of the present disclosure.

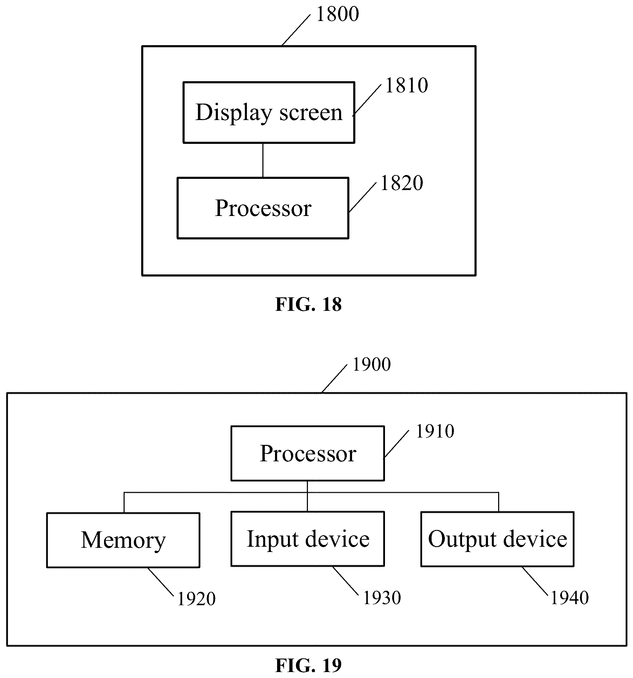

FIG. 18 is a schematic structural diagram of a display apparatus based on a dock bar according to an exemplary embodiment of the present disclosure.

As shown in FIG. 18, in an embodiment, the display apparatus 1800 based on a dock bar includes: a display screen 1810 and a processor 1820.

The display screen 1810 is configured for displaying a dock bar, and displaying a target component in the dock bar.

The processor 1820 is configured for determining a target scenario based on content displayed in a target area of the display screen 1810 and/or a running state of an application of a target type in an electronic device; determining, based on the target scenario, the target component in a plurality of preset components, wherein the preset components are configured for operating the application of the target type by a user, the preset components are configured for operating the application of the target type by a user; and in response to a switching operation performed by the user on the target component, re-determining a target scenario, and returning to the determining, based on the target scenario, the target component in a plurality of preset components.

In an exemplary embodiment, the processor 1820 is configured for running instructions stored in memory to perform: determining the target scenario as a first scenario based on that a display interface of the application of the target type is not displayed in the target area and/or the application of the target type is in a non-enabled state; and determining a first component in the plurality of preset components as the target component based on the first scenario, wherein the first component is configured for displaying a first icon corresponding to an initial application, and the initial application is of the target type.

In an exemplary embodiment, the processor 1820 is configured for running instructions stored in memory to perform: determining the target scenario as a second scenario based on that the display interface of the application of the target type is displayed in the target area and/or the application of the target type is in an enabled state; and determining a second component in the plurality of preset components as the target component based on the second scenario, wherein the second component is configured for displaying a second icon corresponding to at least one candidate application, and the at least one candidate application is of the target type.

In an exemplary embodiment, the processor 1820 is configured for running instructions stored in memory to perform: determining the target scenario as a third scenario based on that at least one application of the audio type is in the enabled state, and that an audio playlist of the at least one application of the audio type is displayed in the target area; and determining a third component in the plurality of preset components as the target component based on the third scenario, wherein the third component is configured for displaying a third icon corresponding to at least one audio to be played in the audio playlist.

In an exemplary embodiment, the processor 1820 is configured for running instructions stored in memory to perform: in response to an operation performed by the user on the first icon, determining the second scenario as the new target scenario; or in response to an operation performed by the user on any one of the second icon, determining a third scenario as the new target scenario.

In an exemplary embodiment, the processor 1820 is configured for running instructions stored in memory to perform: in response to a sliding operation performed by the user on the second component, re-determining the at least one candidate application in the application of the target type; and the display screen 1810 is configured for re-displaying the second component in the dock bar.

In an exemplary embodiment, the processor 1820 is configured for running instructions stored in memory to perform: in response to a sliding operation performed by the user on a third component, re-determining at least one audio to be played in an audio playlist; and the display screen 1810 is configured for re-displaying the third component in the dock bar.

In an exemplary embodiment, the processor 1820 is configured for running instructions stored in memory to perform: determining a target display style in a preset style library based on a mapping relationship between the target scenario and a dock bar display style; and the display screen 1810 is configured for displaying the target component based on the target display style.

In an exemplary embodiment, the processor 1820 is configured for running instructions stored in memory to perform: in response to an editing operation performed by the user on the target component currently displayed in the dock bar, determining an initial component in the plurality of preset components; and determining, based on the first scenario, the initial component in the plurality of preset components as the target component.

### Exemplary Electronic Device

FIG. 19 is a structural diagram of an electronic device according to an exemplary embodiment of the present disclosure. As shown in FIG. 19, the electronic device 1900 includes at least one processor 1910 and a memory 1920.

The processor 1910 may be a central processing unit (CPU) or other forms of processing units with data processing capability and/or instruction execution capability, and may control other components in the electronic device 1900 to perform desired functions.

The memory 1920 may include one or more computer program products, wherein the computer program products may include various forms of computer-readable storage media, such as transitory memory and/or non-transitory memory. The transitory memory may include, for example, random access memory (RAM) and/or cache memory, etc. The non-transitory memory may include, for example, read-only memory (ROM), hard disk, flash memory, etc. One or more computer program instructions may be stored on the computer-readable storage medium. The processor 1910 may run the one or more computer program instructions to implement the display method based on a dock bar described in the foregoing embodiments of the present disclosure and/or other desired functions.

In an example, the electronic device 1900 may further include: an input device 1930 and an output device 1940, and these components are interconnected via a bus system and/or other forms of connection mechanisms (not shown).

The input device 1930 may include, for example, a keyboard, a mouse, etc.

The output device 1940 may output various information to the outside, and may include, for example, a display, a speaker, a printer, and a communication network and remote output devices connected thereto, etc.

Of course, to simplify, FIG. 19 only shows some of components in the electronic device 1900 that are related to the present disclosure, omitting components such as a bus and input/output interfaces. In addition, according to specific application situations, the electronic device 1900 may also include any other appropriate components.

### Exemplary Computer Program Product and Computer-Readable Storage Medium

In addition to the above methods and devices, embodiments of the present disclosure may also be a computer program product, which includes computer program instructions. When run by a processor, the computer program instructions cause the processor to perform the steps of the display method based on a dock bar according to various embodiments of the present disclosure described in the "Exemplary Method" part of this specification.

The computer program product may be a program code written in any combination of one or more programming languages for performing the operations of the embodiments of the present disclosure. The programming languages include object-oriented programming languages, such as Java, C++, etc., and also include conventional procedural programming languages, such as the "C" language or similar programming languages. The program code may be executed entirely on the user's computing device, partly on the user's device, as a stand-alone software package, partly on the user's computing device and partly on a remote computing device, or entirely on a remote computing device or server.

Furthermore, embodiments of the present disclosure may also be a computer-readable storage medium having computer program instructions stored thereon, wherein when run by a processor, the computer program instructions cause the processor to perform the steps of the display method based on a dock bar according to various embodiments of the present disclosure described in the "Exemplary Method" part of this specification.

The computer-readable storage medium may be any combination of one or more readable media. The readable medium may be a readable signal medium or a readable storage medium. The readable storage medium may include, for example, but is not limited to, electrical, magnetic, optical, electromagnetic, infrared, or semiconductor systems, apparatuses, or components, or any combination of the above. More specific examples (as a non-exhaustive list) of the readable storage medium include: an electrical connection with one or more wires, a portable disk, a hard disk, random access memory (RAM), read-only memory (ROM), erasable programmable read-only memory (EPROM or flash memory), an optical fiber, portable compact disk read-only memory (CD-ROM), an optical storage component, a magnetic storage component, or any suitable combination of the above.

The basic principles of the present disclosure have been described above in conjunction with specific embodiments. However, it should be pointed out that the advantages, advantages, effects, etc. mentioned in the present disclosure are merely examples and are not restrictive, and it should not be considered that these advantages, advantages, effects, etc. are essential to the various embodiments of the present disclosure. In addition, the specific details disclosed above are only for exemplary and understanding purposes, and are not restrictive. The above details do not limit the present disclosure to be implemented with the specific details.

The block diagrams of devices, apparatuses, equipment, and systems involved in the present disclosure only serve as illustrative examples and are not intended to require or imply that connections, arrangements, and configurations must be performed in the manner shown in the block diagrams. As those skilled in the art will recognize, these devices, apparatuses, equipment, and systems may be connected, arranged, and configured in any manner. Words such as "comprising", "including", "having", etc., are open words, meaning and may be used interchangeably with "including but not limited to". The words "or" and "and" as used herein refer to, and may be used interchangeably with, the word "and/or", unless the context clearly indicates otherwise. The word "such as" as used herein refers to, and may be used interchangeably with, the phrase "such as but not limited to".

It should also be pointed out that in the apparatuses, devices, and methods of the present disclosure, component or step decompositions and/or recombinations are possible. These decompositions and/or recombinations should be regarded as equivalent solutions of the present disclosure.

The above description of the disclosed aspects is provided to enable any person skilled in the art to make or use the present disclosure. Various modifications to these aspects will be very obvious to those skilled in the art, and the general principles defined herein may be applied to other aspects without departing from the scope of the present disclosure. Therefore, the present disclosure is not intended to be limited to the aspects shown herein, but should be accorded the widest scope consistent with the principles and novel features disclosed herein.

The above description is provided for the purpose of illustration and description. Furthermore, the description is not intended to limit the embodiments of the present disclosure to the forms disclosed herein. Although a number of illustrative aspects and embodiments have been discussed above, those skilled in the art will recognize certain variations, modifications, changes, additions, and sub-combinations thereof.

## Claims

1. A display method based on a dock bar (40), the method comprising:
displaying (100) a dock bar (40) in a display screen (201, 1810) of an electronic device (1900);
determining (200) a target scenario based on content displayed in a target area of the display screen (201, 1810) and/or a running state of an application of a target type in the electronic device (1900);
determining (300, 340), based on the target scenario, a target component in a plurality of preset components, and displaying (370) the target component in the dock bar (40), wherein the preset components are configured for operating the application of the target type by a user; and
in response to a switching operation performed by the user on the target component, re-determining (400) the target scenario, and updating, based on the re-determined target scenario, the target component displayed in the dock bar (40).

2. The display method based on a dock bar (40) according to claim 1, wherein the determining (200) a target scenario based on content displayed in a target area of the display screen (201, 1810) and/or a running state of an application of a target type in the electronic device (1900) comprises:
determining (210) the target scenario as a first scenario based on that a display interface of the application of the target type is not displayed in the target area and/or the application of the target type is in a non-enabled state;
and the determining (300, 340), based on the target scenario, a target component in a plurality of preset components comprises:
determining (310) a first component (41) in the plurality of preset components as the target component based on the first scenario, wherein the first component (41) is configured for displaying a first icon (411) corresponding to an initial application, and the initial application is of the target type.

3. The display method based on a dock bar (40) according to claim 2, wherein the determining (200) a target scenario based on content displayed in a target area of the display screen (201, 1810) and/or a running state of an application of a target type in the electronic device (1900) comprises:
determining (220) the target scenario as a second scenario based on that the display interface of the application of the target type is displayed in the target area and/or the application of the target type is in an enabled state;
and the determining (300, 340), based on the target scenario, a target component in a plurality of preset components comprises:
determining (320) a second component (42) in the plurality of preset components as the target component based on the second scenario, wherein the second component (42) is configured for displaying a second icon (421) corresponding to at least one candidate application (13), and the at least one candidate application (13) is of the target type.

4. The display method based on a dock bar (40) according to claim 3, wherein the target type is an audio type, and the determining (200) a target scenario based on content displayed in a target area of the display screen (201, 1810) and/or a running state of an application of a target type in the electronic device (1900) comprises:
determining (230) the target scenario as a third scenario based on that at least one application of the audio type is in the enabled state, and that an audio playlist (45) of the at least one application of the audio type is displayed in the target area; and the determining (300, 340), based on the target scenario, a target component in a plurality of preset components comprises:
determining (330) a third component (43) in the plurality of preset components as the target component based on the third scenario, wherein the third component (43) is configured for displaying a third icon (431) corresponding to at least one audio to be played in the audio playlist (45).

5. The display method based on a dock bar (40) according to claim 3 or 4, wherein the in response to a switching operation performed by the user on the target component, re-determining (400) the target scenario comprises:
in response to an operation performed by the user on the first icon (411), determining (410) the second scenario as the new target scenario; or
in response to an operation performed by the user on any one of the second icon (421), determining (420) a third scenario as the new target scenario.

6. The display method based on a dock bar (40) according to claim 4 or 5, wherein the method further comprises:
in response to a sliding operation performed by the user on the second component (42), re-determining (500) the at least one candidate application (13) in the application of the target type, and re-displaying the second component (42) in the dock bar (40); or
in response to a sliding operation performed by the user on a third component (43), re-determining (600) at least one audio to be played in an audio playlist (45), and re-displaying the third component (43) in the dock bar (40).

7. The display method based on a dock bar (40) according to claim 1, wherein the displaying (370) the target component in the dock bar (40) comprises:
determining (350) a target display style in a preset style library based on a mapping relationship between the target scenario and a dock bar display style; and
displaying (360) the target component based on the target display style.

8. The display method based on a dock bar (40) according to claim 2, wherein the method further comprises:
in response to an editing operation performed by the user on the target component currently displayed in the dock bar (40), determining (700) an initial component in the plurality of preset components;
and the determining (300, 340), based on the target scenario, a target component in a plurality of preset components comprises:
determining (370), based on the first scenario, the initial component in the plurality of preset components as the target component.

9. A display apparatus (1800) based on a dock bar (40), comprising:
a display screen (201, 1810) and a processor (101, 1820), wherein
the display screen (201, 1810) is configured for displaying a dock bar (40), and displaying a target component in the dock bar (40); and
the processor (101, 1820) is configured for determining a target scenario based on content displayed in a target area of the display screen (201, 1810) and/or a running state of an application of a target type in an electronic device (1900); determining, based on the target scenario, the target component in a plurality of preset components, wherein the preset components are configured for operating the application of the target type by a user, the preset components are configured for operating the application of the target type by a user; and in response to a switching operation performed by the user on the target component, re-determining a target scenario, and returning to the determining, based on the target scenario, the target component in a plurality of preset components.

10. The display apparatus (1800) according to claim 9, wherein the processor (101, 1820) is configured for running instructions stored in memory to perform:
determining the target scenario as a first scenario based on that a display interface of the application of the target type is not displayed in the target area and/or the application of the target type is in a non-enabled state; and
determining a first component (41) in the plurality of preset components as the target component based on the first scenario, wherein the first component (41) is configured for displaying a first icon (411) corresponding to an initial application, and the initial application is of the target type.

11. The display apparatus (1800) according to claim 10, wherein the processor (101, 1820) is configured for running instructions stored in memory to perform:
determining the target scenario as a second scenario based on that the display interface of the application of the target type is displayed in the target area and/or the application of the target type is in an enabled state; and
determining a second component (42) in the plurality of preset components as the target component based on the second scenario, wherein the second component (42) is configured for displaying a second icon (421) corresponding to at least one candidate application (13), and the at least one candidate application (13) is of the target type.

12. The display apparatus (1800) according to claim 11, wherein the processor (101, 1820) is configured for running instructions stored in memory to perform:
determining the target scenario as a third scenario based on that at least one application of the audio type is in the enabled state, and that an audio playlist (45) of the at least one application of the audio type is displayed in the target area; and
determining a third component (43) in the plurality of preset components as the target component based on the third scenario, wherein the third component (43) is configured for displaying a third icon (431) corresponding to at least one audio to be played in the audio playlist (45).

13. The display apparatus (1800) according to claim 9, wherein
the processor (101, 1820) is configured for running instructions stored in memory to perform: determining a target display style in a preset style library based on a mapping relationship between the target scenario and a dock bar display style; and
the display screen (201, 1810) is configured for displaying the target component based on the target display style.

14. The display apparatus (1800) according to claim 10, wherein the processor (101, 1820) is configured for running instructions stored in memory to perform:
in response to an editing operation performed by the user on the target component currently displayed in the dock bar (40), determining an initial component in the plurality of preset components; and
determining, based on the first scenario, the initial component in the plurality of preset components as the target component.

15. An electronic device (1900), comprising: one or more processors (101, 1910), and a memory (102, 1920), wherein the memory (102, 1920) stores computer instructions; and the computer instructions, when run by the processor (101, 1910), cause the processor (101, 1910) to perform the method according to any one of claims 1 to 8.
